# EUROPEAN PATENT APPLICATION

(11) **EP 3 530 697 A1**
(43) Date of publication of application: **28.08.2019**
(21) Application number: 17864820.0
(22) Date of filing: 13.10.2017
(51) Int. Cl.: C08L 71/12, C08J 5/00, C08K 5/42, C08K 5/523, C08L 25/04

(54) **POLY(PHENYLENE ETHER) RESIN COMPOSITION**

(30) Priority: 24.10.2016 JP 2016208123
(71) Applicant: ASAHI KASEI KABUSHIKI KAISHA, Tokyo 100-0006 (JP)
(72) Inventor: MIYAMOTO Akira, Tokyo 100-0006 (JP)
(74) Representative: Strehl Schübel-Hopf & Partner
(86) International application number: PCT/JP2017/037189
(87) International publication number: WO 2018/079311

(57) **Abstract**

Provided is a highly flame-retarded polyphenylene ether resin composition that, even when ignited, efficiently forms bulky porous char serving as a combustion barrier layer and, as a result, can reduce heat release and smoke production during combustion, and that is also easily colorable. The polyphenylene ether resin composition contains a polyphenylene ether (A), an organosulfonic acid and/or organosulfonic acid alkali metal salt (C), and an aromatic phosphate flame retardant (D). The polyphenylene ether resin composition contains 50 mass% or more of the polyphenylene ether (A) per 100 mass% of the polyphenylene ether resin composition and has a maximum heat release rate (HRR (max)) of 250 kW/m² or less as measured in accordance with ISO 5660-1 using a cone calorimeter.

## Description

### TECHNICAL FIELD

The present disclosure relates to a polyphenylene ether resin composition.

### BACKGROUND

Polyphenylene ether resin compositions are resin materials that excel in terms of light weight, heat resistance, mechanical properties, shaping processability, acid/alkali resistance, dimensional stability, electrical characteristics, and so forth, and that are widely used, for example, in consumer electronics and office automation (OA), office equipment, information devices, and the automotive industry.

In general, resin compositions in which a polyphenylene ether and a styrene resin are compounded in a freely selected ratio depending on the levels of heat resistance and shaping fluidity that are required and in which elastomer components, additive components such as flame retardants and heat stabilizers, and so forth are additionally compounded as necessary are widely used as polyphenylene ether resin compositions. On the other hand, polyphenylene ether resin compositions obtained through combination of a polyphenylene ether with any of a variety of resins other than a styrene resin (for example, a polyamide resin, a polyolefin resin, a PPS resin, a polyester resin, or a polycarbonate resin) have recently been proposed.

In recent years, there have been increasing requirements in relation to flaming heat release, smoke density, and smoke toxicity during fire of resin manufactured goods used in public buildings, transportation (for example, railway vehicles, aircraft, and ships), and so forth. For example, manufactured goods (including cables) used in railway vehicles in Europe are required to have fire safety performance in terms of flame spread, ignitability, heat release, smoke production, toxicity, and so forth as stipulated in the European Standard EN 45545-2.

One property of polyphenylene ether resin compositions is that they readily form char during combustion. For example, NPL 1 provides an explanation relating to a resin material for which smoke production during combustion is reduced by enhancing char formation characteristics of a polyphenylene ether resin.

PTL 1 discloses a technique for reducing smoke production during combustion in relation to a polyphenylene ether resin composition containing a polyphenylene ether, a poly(alkenyl aromatic compound), an organophosphate flame retardant, a polysiloxane including a specific functional group unit, and also an organic acid. However, in the case of a compound composition in which citric acid, which provides a greatest low smoke production effect, is used, problems arise in terms that coloring of the resin is hindered by the color tone of the resin having significantly increased redness, and also in terms that an effect of reducing the heat release rate of the composition is unstable and a dramatic increase in the heat release rate often occurs.

PTL 2 discloses the flame retardance of a copolymer composition obtained through melt extrusion of a functionalized polyphenylene ether and an organic amine-functionalized organopolysiloxane, and also describes an effect of low smoke production. However, the reductive effect with respect to heat release and smoke production of this composition is inadequate from a practical viewpoint.

PTL 3 discloses a resin composition containing a polyphenylene ether, a carboxylic acid anhydride-modified product of a hydrogenated block copolymer, and a non-halogenic flame retardant compound. However, the effect in relation to providing this composition with low smoke production is inadequate.

PTL 4 discloses a resin composition containing a polyphenylene ether, a carboxylic acid anhydride-modified product of a hydrogenated block copolymer, a functional group-containing polysiloxane, and an aromatic phosphate flame retardant. However, the low smoke production effect of this composition is inadequate.

PTL 5 discloses a concept of forming "expanding char" and reducing smoke production in a blend of a polyphenylene ether and a phenylsiloxane fluid. However, there are problems in terms that the low smoke production effect of this composition is inadequate, and also in terms of lack of shaping properties because the fluidity of molten resin is poor and external appearance defects are easily formed in shaped articles.

PTL 6 discloses a polyphenylene ether resin containing methyl phenyl silicone having a phenyl group content within a specific range. However, further enhancement is desirable in terms of the effect in relation to smoke production.

### CITATION LIST

### Patent Literature

PTL 1: JP 2010-515803 A
PTL 2: JP H7-196811 A
PTL 3: JP H8-41310 A
PTL 4: JP H8-165423 A
PTL 5: JP H6-62843 B
PTL 6: JP 2000-297209 A

### Non-Patent Literature

NPL 1: Sunada, "Low smoke production Noryl resin having excellent anti-FST characteristics", Japan Plastics, February 2008, vol. 59 (2), p. 51-57

### SUMMARY

### (Technical Problem)

An objective of the present disclosure is to provide a highly flame-retarded polyphenylene ether resin composition that, even when ignited, efficiently forms bulky porous char serving as a combustion barrier layer and, as a result, can reduce heat release and smoke production during combustion, and that is also easily colorable.

### (Solution to Problem)

The inventor carried out diligent investigation to achieve the objective described above and discovered that when a polyphenylene ether resin composition contains a specific amount of a polyphenylene ether (A), an organosulfonic acid and/or organosulfonic acid alkali metal salt (C), and an aromatic phosphate flame retardant (D), and the maximum heat release rate (HRR (max)) thereof as measured in accordance with ISO 5660-1 using a cone calorimeter is not more than a specific value, or when a polyphenylene ether resin composition contains a specific amount of a polyphenylene ether (A), a specific amount of an organosulfonic acid and/or organosulfonic acid alkali metal salt (C), a specific amount of an aromatic phosphate flame retardant (D), and, optionally, a styrene resin (B), it is possible to obtain a polyphenylene ether resin composition that has an excellent or good low smoke production effect and that is easily colorable. In this manner, the inventor completed the present disclosure.

Moreover, a PPE resin composition of a present embodiment is preferably a resin composition that efficiently forms bulky porous char during combustion, has a low flaming heat release rate and low smoke production, and, at the same time, solves the issue of resin composition discoloring.

Specifically, the present disclosure provides the following.
[1] A polyphenylene ether resin composition comprising:
   a polyphenylene ether (A);
   an organosulfonic acid and/or organosulfonic acid alkali metal salt (C); and
   an aromatic phosphate flame retardant (D), wherein
      50 mass% or more of the polyphenylene ether (A) is contained per 100 mass% of the polyphenylene ether resin composition, and
      the polyphenylene ether resin composition has a maximum heat release rate (HRR (max)) of 250 kW/m² or less as measured in accordance with ISO 5660-1 using a cone calorimeter with a proviso that in measurement of the maximum heat release rate (HRR (max)) using the cone calorimeter, radiant heat is 50 kW/m², a distance between a lower edge of a cone heater and an upper surface of a plate specimen for evaluation is 25 mm, and a plate specimen for evaluation obtained by arranging two 90 mm (L) × 50 mm (W) × 2.5 mm (t) plates formed from the polyphenylene ether resin composition in parallel is used.
[2] A polyphenylene ether resin composition comprising, per 100 mass% of the polyphenylene ether resin composition:
   50 mass% to 90 mass% of a polyphenylene ether (A);
   0 mass% to 40 mass% of a styrene resin (B);
   0.01 mass% to 5 mass% of an organosulfonic acid and/or organosulfonic acid alkali metal salt (C); and
   5 mass% to 25 mass% of an aromatic phosphate flame retardant (D).
[3] The polyphenylene ether resin composition according to the foregoing [1] or [2], wherein the organosulfonic acid and/or organosulfonic acid alkali metal salt (C) is potassium perfluorobutanesulfonate.
[4] The polyphenylene ether resin composition according to any one of the foregoing [1] to [3], further comprising 0.1 mass% to 5 mass% of an amino group-containing modified polysiloxane (E) per 100 mass% of the polyphenylene ether resin composition.
[5] The polyphenylene ether resin composition according to the foregoing [4], wherein the amino group-containing modified polysiloxane (E) has a kinematic viscosity of 10 mm²/s to 300 mm²/s at 25°C.
[6] The polyphenylene ether resin composition according to the foregoing [4] or [5], wherein an amino group equivalent of the amino group-containing modified polysiloxane (E) is 0.1 mmol/g to 2 mmol/g.
[7] The polyphenylene ether resin composition according to any one of the foregoing [4] to [6], wherein the amino group-containing modified polysiloxane (E) is an amino group-containing modified polydimethylsiloxane.
[8] The polyphenylene ether resin composition according to any one of the foregoing [1] to [7], wherein the polyphenylene ether (A) includes a polyphenylene ether functionalized by an unsaturated carboxylic acid or an acid anhydride.
[9] A shaped product comprising, per 100 mass% of the shaped product:
   50 mass% to 90 mass% of a polyphenylene ether (A);
   0 mass% to 40 mass% of a styrene resin (B);
   0.01 mass% to 5 mass% of an organosulfonic acid and/or organosulfonic acid alkali metal salt (C);
   5 mass% to 25 mass% of an aromatic phosphate flame retardant (D); and
   0.1 mass% to 5 mass% of an amino group-containing modified polysiloxane (E), wherein
   the shaped product has a maximum heat release rate (HRR (max)) of 250 kW/m² or less as measured in accordance with ISO 5660-1 using a cone calorimeter with a proviso that in measurement of the maximum heat release rate (HRR (max)) using the cone calorimeter, radiant heat is 50 kW/m², a distance between a lower edge of a cone heater and an upper surface of a plate specimen for evaluation is 25 mm, and a plate specimen for evaluation obtained by arranging two 90 mm (L) × 50 mm (W) × 2.5 mm (t) shaped products in parallel is used.

### (Advantageous Effect)

The present disclosure can provide a highly flame-retarded polyphenylene ether resin composition that, even when ignited, efficiently forms bulky porous char serving as a combustion barrier layer and, as a result, can reduce heat release and smoke production during combustion, and that is also easily colorable.

### BRIEF DESCRIPTION OF THE DRAWINGS

In the accompanying drawings:
FIG. 1 is a schematic view illustrating one example of a cone calorimeter used in cone calorimeter measurement in a present embodiment; and

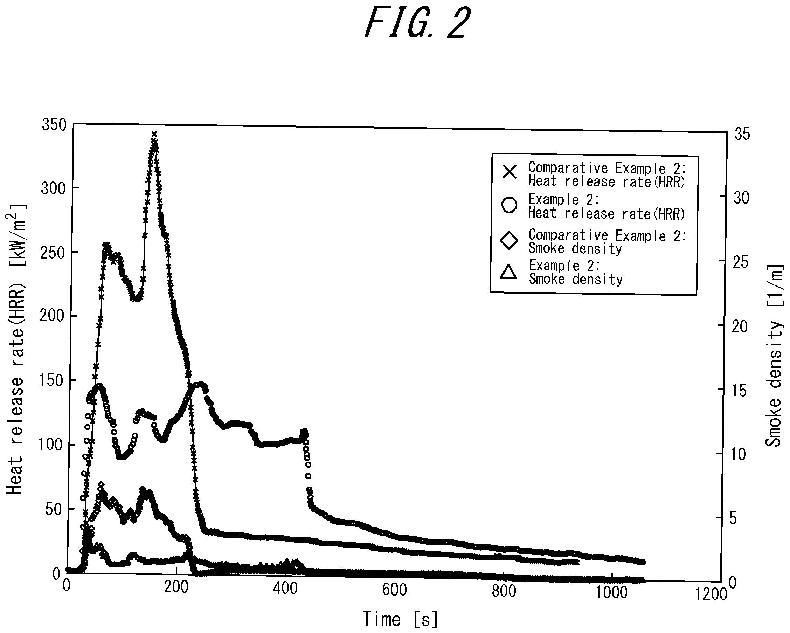

FIG. 2 illustrates one example of cone calorimeter measurement results in a present embodiment.

### DETAILED DESCRIPTION

The following provides a detailed description of an embodiment of the present disclosure (hereinafter, also referred to as the "present embodiment"). However, the present disclosure is not limited by the following description.

### [Polyphenylene ether resin composition]

A polyphenylene ether resin composition of the present embodiment (also referred to as a "PPE resin composition" in the present description) contains: a polyphenylene ether (A); an organosulfonic acid and/or organosulfonic acid alkali metal salt (C); and an aromatic phosphate flame retardant (D), wherein 50 mass% or more of the polyphenylene ether (A) is contained per 100 mass% of the polyphenylene ether resin composition, and the polyphenylene ether resin composition has a maximum heat release rate (HRR (max)) of 250 kW/m² or less as measured in accordance with ISO 5660-1 using a cone calorimeter, or the polyphenylene ether resin composition of the present embodiment contains, per 100 mass% of the PPE resin composition: 50 mass% to 90 mass% of a polyphenylene ether (A); 0 mass% to 40 mass% of a styrene resin (B); 0.01 mass% to 5 mass% of an organosulfonic acid and/or organosulfonic acid alkali metal salt (C); and 5 mass% to 25 mass% of an aromatic phosphate flame retardant (D).

The polyphenylene ether resin composition of the present embodiment may optionally further contain an amino group-containing modified polysiloxane (E), a modifier (F), other components, and so forth.

The polyphenylene ether resin composition of the present embodiment can be obtained through melt-kneading of these components using a melt kneader or the like, a representative example of which is a twin screw extruder. Various melt-kneading methods can be adopted as the kneading method. For example, ingredients such as components (A) to (F) may be kneaded simultaneously, or kneading may be performed after preparing a blend of a plurality of the components in advance for use as a raw material.

### (Polyphenylene ether (A))

The polyphenylene ether (A) (also referred to as "component (A)" in the present description) is preferably a homopolymer or a copolymer that includes a repeating unit represented by the following general formula (1) and/or (2). 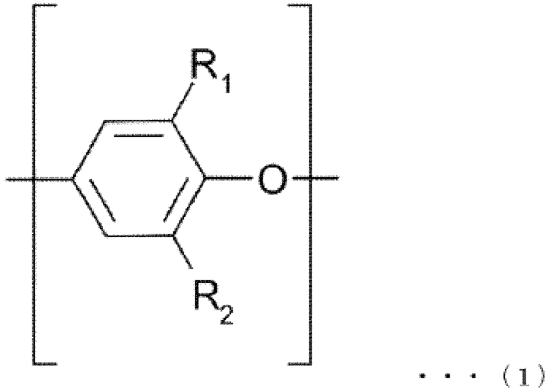 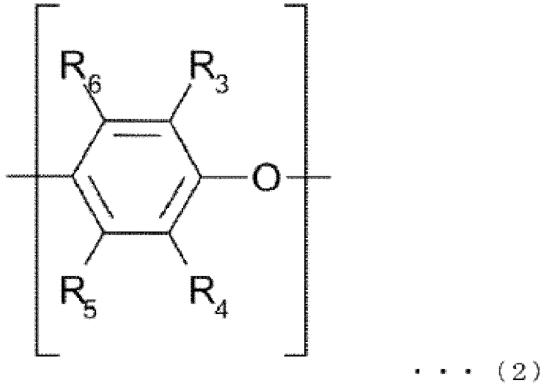 (In general formulae (1) and (2), R₁, R₂, R₃, R₄, R₅, and R₆ are each, independently of one another, a monovalent residue selected from the group consisting of an alkyl group having a carbon number of 1 to 4, an aryl group having a carbon number of 6 to 12, a halogen atom, and a hydrogen atom. However, a case in which R₁ and R₂ are both hydrogen atoms and a case in which R₃ and R₄ are both hydrogen atoms are excluded.)

The carbon number of the alkyl group is preferably 1 to 3, the carbon number of the aryl group is preferably 6 to 8, and a hydrogen atom is preferable among the monovalent residues listed above.

The number of repeating units represented by general formula (1) and/or (2) that are included in the polyphenylene ether (A) is not specifically limited since it varies depending on the molecular weight distribution of the polyphenylene ether (A).

Examples of homopolymers that may be used as the polyphenylene ether (A) include, but are not limited to, poly(2,6-dimethyl-1,4-phenylene) ether, poly(2-methyl-6-ethyl-1,4-phenylene) ether, poly(2,6-diethyl-1,4-phenylene) ether, poly(2-ethyl-6-n-propyl-1,4-phenylene) ether, poly(2,6-di-n-propyl-1,4-phenylene) ether, poly(2-methyl-6-n-butyl-1,4-phenylene) ether, poly(2-ethyl-6-isopropyl-1,4-phenylene) ether, poly(2-methyl-6-chloroethyl-1,4-phenylene) ether, poly(2-methyl-6-hydroxyethyl-1,4-phenylene) ether, and poly(2-methyl-6-chloroethyl-1,4-phenylene) ether. In particular, poly(2,6-dimethyl-1,4-phenylene) ether is preferable from a viewpoint of ease of raw material acquisition and processability.

Examples of copolymers that may be used as the polyphenylene ether (A) include, but are not limited to, copolymers composed mainly of a polyphenylene ether structure such as a copolymer of 2,6-dimethylphenol and 2,3,6-trimethylphenol, a copolymer of 2,6-dimethylphenol and o-cresol, and a copolymer of 2,3,6-trimethylphenol and o-cresol.

In particular, a copolymer of 2,6-dimethylphenol and 2,3,6-trimethylphenol is preferable from a viewpoint of ease of raw material acquisition and processability, and a copolymer of 90 mass% to 70 mass% of 2,6-dimethylphenol and 10 mass% to 30 mass% of 2,3,6-trimethylphenol is more preferable from a viewpoint of enhancement of physical properties.

The polyphenylene ether (A) may be one type used individually or two or more types used in combination.

The polyphenylene ether (A) may include various phenylene ether units other than those represented by general formulae (1) and (2) to the extent that the effects disclosed herein are not lost and heat resistance of the polyphenylene ether (A) is not excessively reduced.

Examples of phenylene ether units other than those represented by general formulae (1) and (2) include, but are not limited to, a 2-(dialkylaminomethyl)-6-methylphenylene ether unit and a 2-(N-alkyl-N-phenylaminomethyl)-6-methylphenylene ether unit such as described in JP H01-297428 A or JP S63-301222 A, for example.

Moreover, a repeating unit derived from diphenoquinone or the like may be bonded in the polyphenylene ether main chain of the polyphenylene ether (A) in a small amount.

The polyphenylene ether (A) may include a functionalized polyphenylene ether obtained through reaction (modification) of some or all of the constitutional units of the polyphenylene ether with a functionalizing agent, or may be a functionalized polyphenylene ether. The functionalizing agent may be an acyl group-containing compound, for example, and may be a compound that includes an acyl group (for example, a carboxyl group, an acid anhydride group, an acid amide group, an imide group, or a group derived from a carboxylic acid ammonium salt) and at least one selected from the group of functional groups consisting of an amine, an orthoester group, and a hydroxy group.

The functionalized polyphenylene ether is preferably a functionalized polyphenylene ether obtained through melt-kneading of a mixture of a polyphenylene ether and an unsaturated carboxylic acid or acid anhydride, and is more preferably a maleic anhydride-modified polyphenylene ether obtained through melt-kneading of a mixture of a polyphenylene ether and maleic anhydride. The maleic anhydride-modified polyphenylene ether can be obtained by, for example, feeding 0.1 parts by mass to 5 parts by mass of maleic anhydride per 100 parts by mass of the polyphenylene ether into a twin screw extruder, and performing melt-kneading at a temperature of 270°C to 335°C.

In a case in which a maleic anhydride-modified polyphenylene ether is used, the PPE resin composition of the present embodiment preferably further contains a subsequently described amino group-containing modified polysiloxane (E). This is because a maleic anhydride unit in the maleic anhydride-modified polyphenylene ether and an amino group unit in the amino group-containing modified polysiloxane are thought to react with one another during melt-kneading.

A ratio (Mw/Mn value) of weight-average molecular weight Mw and number-average molecular weight Mn of the polyphenylene ether (A) is preferably 1.0 or more from a viewpoint of shaping processability of the PPE resin composition, is preferably 5.5 or less from a viewpoint of mechanical properties of the PPE resin composition, and is more preferably 1.5 to 4.5, and even more preferably 2.0 to 4.5.

The weight-average molecular weight Mw and the number-average molecular weight Mn can be obtained from polystyrene-equivalent molecular weights through measurement by gel permeation chromatography (GPC).

The reduced viscosity of the polyphenylene ether (A) is preferably 0.25 dL/g or more from a viewpoint of adequate mechanical properties, is preferably 0.65 dL/g or less from a viewpoint of shaping processability, and is more preferably 0.27 dL/g to 0.63 dL/g, even more preferably 0.30 dL/g to 0.55 dL/g, and particularly preferably 0.33 dL/g to 0.42 dL/g.

The reduced viscosity can be measured by an Ubbelohde-type viscometer at a temperature of 30°C using a 0.5 g/dL chloroform solution.

The content of component (A) in the PPE resin composition of the present embodiment is 50 mass% or more relative to the total amount of the polyphenylene ether resin composition in order to cause sufficient char formation during combustion and achieve reduction of the flaming heat release rate and low smoke production, is preferably 90 mass% or less relative to the total amount of the polyphenylene ether resin composition from a viewpoint of ease of shaping processing, and is more preferably 50 mass% to 80 mass%, even more preferably 55 mass% to 78 mass%, further preferably 60 mass% to 75 mass%, and particularly preferably 65 mass% to 73 mass%.

### (Styrene resin (B))

The styrene resin (B) (also referred to as "component (B)" in the present description) is a polymer obtained through polymerization of a monomer component including a styrene compound in the presence or absence of a rubbery polymer. The monomer component may further include a compound that is copolymerizable with the styrene compound.

Component (B) may be one type used individually or two or more types used in combination.

The styrene resin (B) may include more than 60 mass% of constitutional units derived from the styrene compound per 100 mass% of the styrene resin (B), and may preferably include 70 mass% or more of such constitutional units.

Examples of the styrene compound include, but are not limited to, styrene, α-methylstyrene, 2,4-dimethylstyrene, monochlorostyrene, p-methylstyrene, p-tert-butylstyrene, and ethylstyrene. In particular, the use of styrene is preferable from a viewpoint of practicality of raw material.

Examples of the compound that is copolymerizable with the styrene compound include, but are not limited to, methacrylic acid esters such as methyl methacrylate and ethyl methacrylate; unsaturated nitrile compounds such as acrylonitrile and methacrylonitrile; and acid anhydrides such as maleic anhydride.

From a viewpoint of obtaining an even better balance of shaped article rigidity, impact resistance, and melt fluidity in shaping, it is preferable to use two or more of high impact polystyrene (HIPS), general purpose polystyrene (GPPS), styrene-acrylonitrile copolymer (AS), and the like in combination as the styrene resin (B).

It is also possible to use a styrene resin as a single component as the styrene resin (B). For example, an embodiment in which HIPS is used with the aim of increasing impact resistance is also preferable.

In general, rubber-modified polystyrene including 70 mass% to 99 mass% of constitutional units derived from a styrene compound and 1 mass% to 30 mass% of constitutional units derived from a diene rubber can preferably be used as the HIPS. The diene rubber included in the HIPS may, for example, be a homopolymer of a conjugated diene compound such as butadiene, isoprene, or chloroprene, a copolymer of a conjugated diene compound and an unsaturated nitrile compound or aromatic vinyl compound, or natural rubber, and may be one type or two or more types used in combination. Of these examples, polybutadiene and butadiene-styrene copolymer are particularly preferable as the diene rubber included in the HIPS. The HIPS may, for example, be obtained by a method such as emulsion polymerization, suspension polymerization, bulk polymerization, solution polymerization, or a combination thereof.

The content of component (B) in the PPE resin composition of the present embodiment relative to the total amount of the PPE resin composition is preferably 0 mass% to 40 mass%, more preferably 5 mass% to 35 mass%, even more preferably 10 mass% to 30 mass%, and particularly preferably 15 mass% to 20 mass%.

It is preferable that the styrene resin (B) is used in the resin composition of the present embodiment from a viewpoint of enhancing shaping fluidity and impact resistance. However, it is preferable that the content of the styrene resin (B) is 40 mass% or less in order to achieve reduction of flaming heat release rate and low smoke production because char is not sufficiently formed during combustion if the content of the styrene resin (B) is more than 40 mass%.

### (Organosulfonic acid and/or organosulfonic acid alkali metal salt (C))

The organosulfonic acid and/or organosulfonic acid alkali metal salt (C) (also referred to as "component (C)" in the present description) used in the PPE resin composition of the present embodiment has an effect of causing the polyphenylene ether resin composition to more efficiently form char during combustion.

Component (C) may be one type used individually or two or more types used in combination.

As a result of the PPE resin composition of the present embodiment containing component (C), the PPE resin composition forms char that serves as a strong and bulky barrier inhibiting combustion in measurement of the heat release rate using a cone calorimeter (measured in accordance with ISO 5660-1), the heat release rate is consequently restricted to a low level, and smoke production is suppressed. It is presumed that the presence of component (C) causes formation of char having high expansibility, increases degassing reaction during combustion, and promotes carbonization reaction of the polyphenylene ether resin composition.

In addition, the inclusion of component (C) in the PPE resin composition of the present embodiment is advantageous in terms that unnecessary coloring can be avoided in production of the polyphenylene ether resin composition by melt-kneading and in terms that the compounding working environment can be improved due to little volatile content being generated.

Preferable examples of organosulfonic acids that may be used include aromatic sulfonic acids such as benzenesulfonic acid, paratoluenesulfonic acid, naphthalenesulfonic acid, and alkylbenzenesulfonic acid.

Preferable examples of organosulfonic acid alkali metal salts that may be used include aromatic sulfonic acid alkali metal salts and perfluoroalkane sulfonic acid alkali metal salts. Specific examples include alkali metal salts of diphenylsulfone-3-sulfonic acid, alkali metal salts of diphenylsulfone-3,3'-disulfonic acid, and alkali metal salts of diphenylsulfone-3,4'-disulfonic acid. For these alkali metals salts, the alkali metal is preferably sodium or potassium, and is more preferably potassium.

Specific examples of preferable perfluoroalkane sulfonic acid alkali metal salts include perfluoromethanesulfonic acid alkali metal salts, perfluoroethanesulfonic acid alkali metal salts, perfluoropropanesulfonic acid alkali metal salts, perfluorobutanesulfonic acid alkali metal salts, perfluoromethylbutanesulfonic acid alkali metal salts, perfluorohexanesulfonic acid alkali metal salts, perfluoroheptanesulfonic acid alkali metal salts, and perfluorooctanesulfonic acid alkali metal salts. The alkali metal is preferably sodium or potassium, and is more preferably potassium. In particular, potassium perfluorobutanesulfonate can suitably be used.

The content of component (C) in the PPE resin composition of the present embodiment relative to the total amount of the PPE resin composition is preferably 0.01 mass% to 5 mass%, more preferably 0.03 mass% to 3 mass%, even more preferably 0.05 mass% to 1 mass%, further preferably 0.05 mass% to 0.8 mass%, and particularly preferably 0.05 mass% to 0.5 mass%.

### (Aromatic phosphate flame retardant (D))

The aromatic phosphate flame retardant (D) (also referred to as "component (D)" in the present description) is a non-bromine-containing flame retardant. Component (D) has an effect of causing the PPE resin composition to form char during combustion. Component (D) also has functions of increasing thermal stability and further increasing melt fluidity of the PPE resin composition.

Component (D) may be one type used individually or two or more types used in combination.

Suitable examples of aromatic phosphate flame retardants that may suitably be used include, but are not limited to, triphenyl-substituted type aromatic phosphates such as triphenyl phosphate, tricresyl phosphate, trixylenyl phosphate, cresyl diphenyl phosphate, xylenyl diphenyl phosphate, dixylenyl phenyl phosphate, hydroquinone bisphenol phosphate, resorcinol bisphosphate, and bisphenol A bisphosphate. Of these examples, bisphenol A bisphosphate is more suitable.

The content of component (D) in the PPE resin composition of the present embodiment relative to the total amount of the PPE resin composition is preferably 5 mass% to 25 mass%, more preferably 8 mass% to 20 mass%, even more preferably 10 mass% to 17 mass%, and particularly preferably 11 mass% to 15 mass%.

The content of component (D) is preferably 5 mass% or more in order to impart the desired flame retardance and is preferably 25 mass% or less from a viewpoint of maintaining the heat deformation temperature of the PPE resin composition.

### (Amino group-containing modified polysiloxane (E))

The use of an amino group-containing modified polysiloxane (E) (also referred to as "component (E)" in the present description) in the PPE resin composition of the present embodiment is recognized to have an effect of causing more efficient formation of bulky porous char.

The effect of component (E) is presumed to be that in a process of thermal decomposition of molten resin composition during combustion, component (E) migrates toward the surface of the molten resin from the solid inner part due to low surface free energy of polysiloxane, and polyphenylene ether, of which charring is occurring, is simultaneously pushed toward the surface, which contributes to promoting the formation of strong and bulky char.

Component (E) is preferably a modified polysiloxane including an aminoalkyl substituent that includes at least one primary or secondary amine. Moreover, component (E) is preferably an amino group-containing modified polydimethylsiloxane.

The amino group unit of component (E) also has an effect of increasing dispersibility of component (E) in polyphenylene ether resin, for example.

The amino group in component (E) is preferably an -NH₂ group, a 3-[(2-aminoethyl)amino]propyl group, or the like.

Component (E) may contain other functional substituents such as a phenyl group, an alkoxy group, an aryloxy group, a polyether group, a (meth)acryl group, and an epoxy group as necessary.

In a case in which a phenyl group is included, affinity with polyphenylene ether resin generally tends to improve with increasing phenyl group content, and in some cases surface appearance of a shaped product may be improved. However, the effect of char formation also tends to decrease in this situation because viscosity increases and surface migration tends to decrease. Accordingly, the phenyl group content is preferably optimized in consideration of the balance of char formation function and shaped product surface appearance.

Alkoxy group-containing polysiloxanes are commonly used in room temperature vulcanizing (RTV) silicone rubber compositions, but can also be used in the present embodiment.

Component (E) may include an M unit (R₃SiO_{1/2}), a D unit (R₂SiO_{2/2}), a T unit (RSiO_{3/2}), and/or a Q unit (SiO_{4/2}) in the structure thereof (R is an organic group such as a methyl group, a phenyl group, or a reactive functional group).

A polysiloxane composed of mainly D units (R₂SiO_{2/2}), and in particular a polysiloxane composed of mainly dimethylpolysiloxane has low viscosity, has a high char formation effect due to displaying excellent migration to the surface, and is preferable as component (E).

The kinematic viscosity of component (E) at 25 °C is preferably 10 mm²/s to 300 mm²/s, more preferably 10 mm²/s to 200 mm²/s, even more preferably 10 mm²/s to 150 mm²/s, particularly preferably 10 mm²/s to 100 mm²/s, and most preferably 10 mm²/s to 70 mm²/s.

The kinematic viscosity can be measured in accordance with JIS K 2283.

When the kinematic viscosity of component (E) is more than 300 mm²/s, this tends to result in noticeable phase separation, easier formation of silver streaks and depressions in a shaped product, and loss of shaped article external appearance. Moreover, when the kinematic viscosity of component (E) is less than 10 mm²/s, component (E) tends to become volatile content during melt-kneading and also during shaping processing, the working environment deteriorates, component (E) may become a cause of loss of shaped product external appearance, and the effect of promoting char formation during combustion tends to become inadequate.

An amino group equivalent of component (E) is preferably 0.1 mmol/g to 2 mmol/g, more preferably 0.2 mmol/g to 1.8 mmol/g, and even more preferably 0.3 mmol/g to 1.5 mmol/g.

When the amino group equivalent of component (E) is less than 0.1 mmol/g, this tends to result in strong phase separation of component (E) in the PPE resin composition and easier formation of external appearance defects in a shaped product. On the other hand, when the amino group equivalent of component (E) is more than 2 mmol/g, this tends to have adverse effects in the PPE resin composition such as causing a displeasing odor or unnecessary coloring.

The amino group equivalent can be measured in accordance with JIS K 7237.

The content of component (E) in the PPE resin composition of the present embodiment relative to the total amount of the PPE resin composition is preferably 0.1 mass% to 5.0 mass%, more preferably 0.3 mass% to 5.0 mass%, even more preferably 0.5 mass% to 5.0 mass%, and particularly preferably 1.0 mass% to 5.0 mass%.

The content of component (E) is preferably 0.1 mass% or more in order to bring about the effect of char formation. On the other hand, the use of more than 5 mass% of component (E) tends to cause strong phase separation, noticeable formation of silver streaks in shaping of the PPE resin composition, and loss of shaped article external appearance.

Component (E) is preferably used in combination with a functionalized polyphenylene ether that has been functionalized by an unsaturated carboxylic acid or an acid anhydride as the polyphenylene ether (A). It is presumed that in this situation, a grafted copolymer is obtained through reaction of an amino group unit of component (E) with an acid anhydride unit that has been introduced into the polyphenylene ether, which enables even better dispersibility of component (E) and reduction of external appearance defects formed when the resin composition is used to obtain a shaped product.

In a case in which a polyphenylene ether functionalized by an unsaturated carboxylic acid or an acid anhydride is used as component (A) and in which component (E) is also used, component (A) and component (E) may be melt-kneaded in advance in order to produce a copolymer through a grafting reaction thereof, and then this copolymer may be used as a raw material for the PPE resin composition of the present embodiment.

### (Modifiers (F))

Various modifiers (F) (also referred to as "component (F)" in the present description) may be further used as necessary in the PPE resin composition of the present embodiment with the aim of, for example, enhancing impact resistance, enhancing fluidity in shaping, and enhancing releasability from a mold.

Examples of modifiers (F) that may be used include polymeric materials and the like that display rubbery elasticity (entropic elasticity) such as a styrene thermoplastic elastomer, a core-shell graft copolymer, and an olefin elastomer, and also polyolefin resins and the like.

In a case in which the modifier (F) is a styrene thermoplastic elastomer, the content of constitutional units derived from a styrene compound in the styrene thermoplastic elastomer per 100 mass% of the styrene thermoplastic elastomer may be 60 mass% or less, preferably 50 mass% or less, and more preferably 40 mass% or less.

The term "styrene thermoplastic elastomer" refers to an AB (diblock) copolymer of an alkenyl aromatic compound polymer block (preferably a styrene block) (A) and a diene compound polymer block (preferably a butadiene block or isoprene block) (B), an ABA (triblock) copolymer of such polymer blocks, or a hydrogenated or partially hydrogenated block copolymer of such an AB copolymer or ABA copolymer. The content of the diene compound polymer block per 100 mass% of the entire styrene thermoplastic elastomer is 40 mass% or more, preferably 50 mass% or more, and more preferably 60 mass% or more.

The content of modifier (F) in terms of each component relative to the total amount of the PPE resin composition is preferably 0.5 mass% to 15 mass%, more preferably 0.8 mass% to 10 mass%, and even more preferably 1 mass% to 5 mass%.

### (Other components)

The resin composition of the present embodiment may contain other components such as stabilizers (for example, antioxidants, ultraviolet absorbers, and heat stabilizers), coloring agents, and release agents in a proportion of 0.001 mass% to 3 mass% relative to the total amount of the PPE resin composition. The content of these other components is preferably 0.001 mass% to 2 mass%, and more preferably 0.1 mass% to 1 mass%.

Inorganic fillers may also be used in the PPE resin composition of the present embodiment.

Examples of preferable inorganic fillers include glass fiber, glass flake, milled glass fiber, glass beads, calcium sulfate, calcium carbonate, alumina carbonate, silica, mica, talc, chlorite, carbon fiber, carbon black, and graphite. The amount of inorganic filler that is used is preferably 40 mass% or less relative to the total amount of the PPE resin composition.

### (Production method of polyphenylene ether resin composition)

The resin composition of the present embodiment can be produced by melt-kneading component (A), component (C), component (D), and, as necessary, component (B), component (E), component (F), and other components.

Although the apparatus and various conditions used in production of the resin composition of the present embodiment are not limited to the following, it is preferable that the resin composition is produced using an extruder, with a twin screw extruder, in particular, being suitable from a viewpoint of production efficiency for stable large-scale production of the PPE resin composition.

The screw diameter of the twin screw extruder is preferably 25 mm to 90 mm, and more preferably 40 mm to 70 mm.

In one suitable example of conditions in melt-kneading, melt-kneading is performed with an extruder cylinder temperature setting of 260°C to 330°C, a screw speed of 150 rpm to 450 rpm, and an extrusion rate of 40 kg/h to 250 kg/h.

Moreover, in one preferable example of a method for supplying raw materials into the extruder, component (A), component (B), component (C), component (E), component (F), and/or other components (excluding inorganic fillers) are fed from the top (upstream side) of the extruder, component (D) is fed in a specific amount by a metering pump (for example, a gear pump) via a liquid addition nozzle at a middle stage or downstream side of the extruder, and kneading is performed.

The maximum heat release rate (HRR (max)) of the PPE resin composition of the present embodiment as measured in accordance with ISO 5660-1 using a cone calorimeter is preferably 250 kW/m² or less, more preferably 230 kW/m² or less, even more preferably 200 kW/m² or less, and particularly preferably 180 kW/m² or less.

Measurement of the maximum heat release rate (HRR (max)) using the cone calorimeter is carried out with a radiant heat of 50 kW/m², a distance between a lower edge of a cone heater and an upper surface of a plate specimen for evaluation of 25 mm, and using a plate specimen for evaluation obtained by arranging two 90 mm (L) × 50 mm (W) × 2.5 mm (t) plates formed from the PPE resin composition in parallel.

In measurement of the maximum heat release rate of the PPE resin composition of the present embodiment, the time from the start of measurement until the maximum heat release rate is reached is preferably 40 s to 300 s, and more preferably 120 s to 250 s.

Moreover, in measurement of the PPE resin composition of the present embodiment in accordance with ISO 5660-1 using the cone calorimeter, total heat release from the start of measurement to 3 minutes after the start of measurement is preferably 10 MJ/m² to 30 MJ/m², and more preferably 15 MJ/m² to 25 MJ/m².

Note that the measurement conditions of the cone calorimeter for the heat release from the start of measurement to 3 minutes after the start of measurement are the same as the previously described conditions for the maximum heat release rate.

### [Shaped product]

No specific limitations are placed on the method by which the PPE resin composition of the present embodiment is shaped. For example, methods such as injection molding, extrusion molding, vacuum forming, and pressure forming can suitably be used, with injection molding, in particular, being preferable from a viewpoint of shaped article external appearance characteristics and mass producibility.

A shaped product of the present embodiment may be formed from the PPE resin composition of the present embodiment set forth above.

The shaped product of the present embodiment preferably contains, per 100 mass% of the shaped product: 50 mass% to 90 mass% of a polyphenylene ether (A); 0 mass% to 40 mass% of a styrene resin (B); 0.01 mass% to 5 mass% of an organosulfonic acid and/or organosulfonic acid alkali metal salt (C); 5 mass% to 25 mass% of an aromatic phosphate flame retardant (D); and 0.1 mass% to 5 mass% of an amino group-containing modified polysiloxane (E).

The maximum heat release rate (HRR (max)) of the shaped product of the present embodiment as measured in accordance with ISO 5660-1 using a cone calorimeter is preferably 250 kW/m² or less, more preferably 230 kW/m² or less, even more preferably 200 kW/m² or less, and particularly preferably 180 kW/m² or less.

Measurement of the maximum heat release rate (HRR (max)) using the cone calorimeter is carried out with a radiant heat of 50 kW/m², a distance between a lower edge of a cone heater and an upper surface of a plate specimen for evaluation of 25 mm, and using a plate specimen for evaluation obtained by arranging two 90 mm (L) × 50 mm (W) × 2.5 mm (t) shaped products in parallel.

In a case in which a specimen for measurement of the maximum heat release rate (HRR (max)) using the cone calorimeter is to be obtained from a shaped article, the specimen can be obtained by pulverizing the shaped article and then using a technique such as injection molding or compression molding.

### EXAMPLES

The following describes the present disclosure through specific examples and comparative examples.

Physical property evaluation methods and raw materials in the examples and comparative examples were as described below.

### [Measurement methods]

### (1) Measurement using cone calorimeter

### (Specimen preparation)

Resin composition pellets produced in each example or comparative example were dried using a 90°C hot-air dryer for 1 hour. An injection molding machine (IS-80EPN produced by Toshiba Machine Co., Ltd.) was used to shape the dried resin composition with settings of a cylinder temperature of 280°C, a mold temperature of 90°C, an injection pressure (gauge pressure) of 70 MPa, an injection rate (panel setting value) of 80%, and an injection time/cooling time of 10 s/30 s to obtain a 90 mm (L) × 50 mm (W) × 2.5 mm (t) plate.

### (Measurement using cone calorimeter)

A cone calorimeter C3 (produced by Toyo Seiki Seisaku-Sho, Ltd.) was used to evaluate temporal change in heat release rate and smoke density, etc., for the resin composition produced in each example or comparative example.

Measurement was carried out in accordance with ISO 5660-1 and with a radiant heat of 50 kW/m² and a distance between a lower edge of a cone heater and an upper surface of a plate specimen for evaluation of 25 mm.

The measurement time was 20 minutes at most and was shortened in some cases so long as the required measurement values could be obtained.

Note that the specimen shape in ISO 5660-1 is a 100 mm × 100 mm plate, whereas a plate specimen for evaluation obtained by arranging two 90 mm (L) × 50 mm (W) × 2.5 mm (t) plates formed from the resin composition in parallel such that the 90 mm sides of the two plates faced each another and such that the two plates did not overlap with each other was used in the present examples.

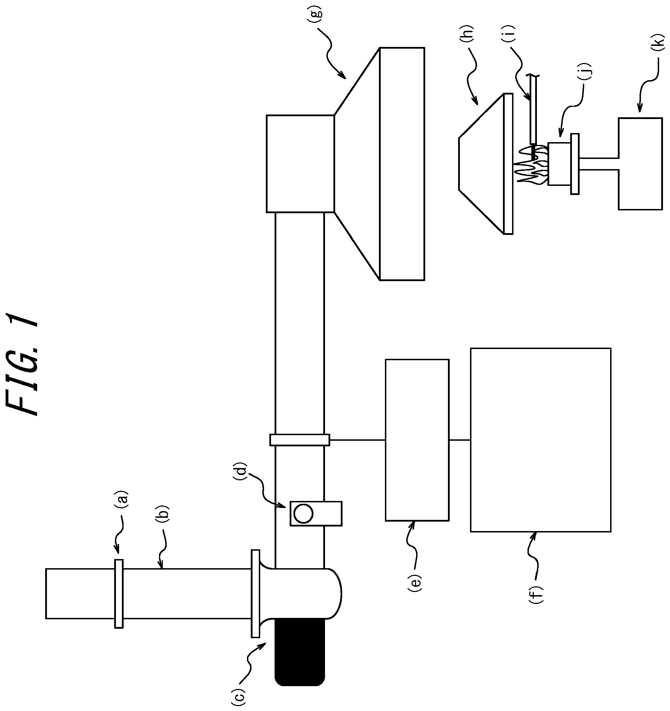

FIG. 1 is a schematic view illustrating the cone calorimeter used in evaluation. In FIG. 1, a plate specimen for evaluation is set in a sample holder (j) and is heated with radiant heat of 50 kW/m² by a cone heater (h). The distance between a lower edge of the cone heater and an upper surface of the plate specimen for evaluation is 25 mm. Combustion gas is guided into an exhaust pipe via a smoke collection hood (g). The heat release rate (HRR) (units: kW/m²) is calculated from oxygen consumption in a gas analyzer (f) via a gas sampler (e). Smoke density (units: 1/m) is measured by a laser smoke density meter (D). The change in mass of the specimen is measured by a load cell (k).

### (1-1) Bulkiness of char

When carrying out a heat release rate test using the cone calorimeter with two plates of 2.5 mm in thickness arranged, the maximum height to which char grew from an upper surface of the initial plate specimen for evaluation during the 20-minute test was observed by eye, and the condition of char formation was judged using the following categories.
Excellent: 8 cm or more
Good: At least 5 cm and less than 8 cm
Poor: Less than 5 cm

### (1-2) Total heat release during 3 minutes after start of measurement (units: MJ/m²)

A cumulative value for heat release (T180) (MJ/m²) was measured for the prepared specimen from the start of measurement using the cone calorimeter until 3 minutes after the start of measurement. The start of measurement of the T180 was taken to be the time of ignition of the specimen. The T180 indicates heat release during the initial 3 minutes and the value thereof is smaller when there is more formation of char that effectively serves as a combustion barrier layer.

### (1-3) Maximum heat release rate (units: kW/m²) and time until maximum heat release rate is reached (units: s)

The cone calorimeter was used to measure a maximum value HRR (max) (kW/m²) of the heat release rate during a measurement time of 20 minutes and the time (s) until the maximum heat release rate was reached for the prepared specimen.

### (1-4) Low smoke production

A maximum value for smoke density (units: 1/m) was measured using the laser smoke density meter of the cone calorimeter and was judged using the following categories.
Excellent: Maximum smoke density of less than 5 m⁻¹
Good: Maximum smoke density of at least 5 m⁻¹ and less than 6 m⁻¹
Satisfactory: Maximum smoke density of at least 6 m⁻¹ and less than 7 m⁻¹ m
Poor: Maximum smoke density of 7 m⁻¹ or more

### (2) Resin composition coloring

Post-melt-kneading coloring of the resin composition produced in each example or comparative example was inspected by eye. Note that a polyphenylene ether resin composition composed of component (A), component (B), and component (D) displays an amber-like hue, whereas there is progression of yellow discoloring and red discoloring when component (C), component (E), and other components are also compounded. Progression of this discoloring was judged by the following standard.
Good: Almost no further progression of yellow discoloring and red discoloring is recognizable
Poor: Noticeable red discoloring occurs
n/a (not applicable): Excluded from evaluation due to black coloring

### [Raw materials]

### <Polyphenylene ether (A)>

(A-1): Poly(2,6-dimethyl-1,4-phenylene) ether (PPE) powder having a reduced viscosity of 0.51 dL/g (measured at 30°C using chloroform solvent)
(A-2): Maleic anhydride-modified polyphenylene ether (M-PPE) obtained by pre-blending 2 parts by mass of maleic anhydride per 100 parts by mass of poly(2,6-dimethyl-1,4-phenylene) ether powder having a reduced viscosity of 0.4 dL/g and then performing melt-kneading at a temperature of 300°C using a twin screw extruder.

### <Styrene resin (B)>

(B-1): High impact polystyrene (HIPS) pellets (product name: CT60® (CT60 is a registered trademark in Japan, other countries, or both), produced by Petrochemicals (Malaysia) Sdn. Bhd.)

### <Organosulfonic acid and/or organosulfonic acid alkali metal salt (C)>

(C-1): Potassium perfluorobutanesulfonate (KFBS) powder (product name: F114® (F114 is a registered trademark in Japan, other countries, or both), produced by DIC Corporation)
(C-2): Paratoluenesulfonic acid (PTS) powder (produced by Wako Pure Chemical Industries, Ltd.)
(C-3): Potassium 3-(phenylsulfonyl)benzenesulfonate (KSS) powder (produced by UCB Japan Co., Ltd.)

### <Aromatic phosphate flame retardant (D)>

(D-1): Bisphenol A bis(diphenyl phosphate) (BDP) viscous liquid (product name: CR741® (CR741 is a registered trademark in Japan, other countries, or both), produced by Daihachi Chemical Industry Co., Ltd.)

### <Amino group-containing modified polysiloxane (E)>

(E-1): Amino-modified silicone (amino-modified silicone 1) liquid composed mainly of dimethylsiloxane units and having a kinematic viscosity of 40 mm²/s at 25°C and an amino group equivalent of 0.4 mmol/g (product name: TSF4701® (TSF4701 is a registered trademark in Japan, other countries, or both), produced by Momentive Performance Materials Inc.)
(E-2): Amino-modified silicone (amino-modified silicone 2) liquid composed mainly of dimethylsiloxane units and having a kinematic viscosity of 35 mm²/s at 25°C and an amino group equivalent of 1.4 mmol/g (product name: L655® (L655 is a registered trademark in Japan, other countries, or both), produced by Wacker Chemie AG)
(E-3): Amino-modified silicone (amino-modified silicone 3) liquid composed mainly of dimethylsiloxane units and having a kinematic viscosity of 200 mm²/s at 25°C and an amino group equivalent of 0.15 mmol/g (product name: L652® (L652 is a registered trademark in Japan, other countries, or both), produced by Wacker Chemie AG)

### <Other components>

SEBS: Hydrogenated styrene-butadiene-styrene block copolymer pellets (product name: KRATON G1651® (KRATON G1651 is a registered trademark in Japan, other countries, or both), produced by Kraton Corporation)
LDPE: Low-density polyethylene pellets (product name: SUNTEC LD M2004® (SUNTEC LD M2004 is a registered trademark in Japan, other countries, or both), produced by Asahi Kasei Corporation)
Citric acid: Produced by Wako Pure Chemical Industries, Ltd.
ZnO: Zinc oxide produced by Wako Pure Chemical Industries, Ltd.
ZnS: Zinc sulfide produced by Wako Pure Chemical Industries, Ltd.
CB: Carbon black as coloring agent (#52 produced by Mitsubishi Chemical Corporation)

### [Examples 1 to 12 and Comparative Examples 1 to 5]

A twin screw extruder (ZSK-25, produced by Coperion Inc., L/D = 53) was used to produce melt-kneaded compositions with the make-ups indicated in Table 1. Feeding of raw materials into the extruder was performed by mechanically mixing the components indicated in Table 1 (excluding component (D)) in advance in a specific ratio, feeding the resultant mixture at a specific rate from a top position in the extruder using a weighing feeder, and feeding a specific amount of component (D) that had been heated to 80°C from a middle stage position in the extruder, via an injection nozzle, using a gear pump.

The resin compositions were obtained through melt-kneading under conditions of an extruder cylinder temperature setting of 300°C, a screw speed of 200 rpm, an extrusion rate of 20 kg/hr, and a vent degree of vacuum of 8 kPa.

Evaluation results for the obtained resin compositions are shown below in Table 1.

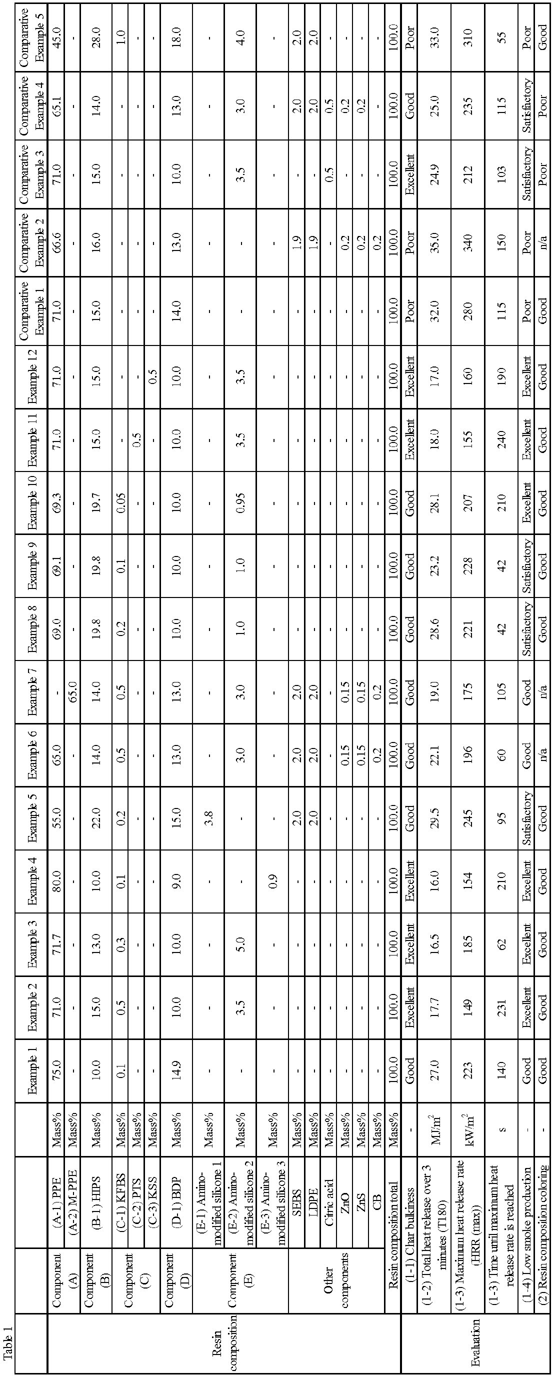

The examples indicated in Table 1 clearly demonstrate the excellent char formation action, low heat release, low smoke production, and low discoloration in melting of the PPE resin composition of the present embodiment.

### INDUSTRIAL APPLICABILITY

Various shaped products obtained through shaping using the polyphenylene ether resin composition of the present embodiment have excellent flame retardance and, even when ignited, efficiently form bulky porous char (carbonized product) serving as a combustion barrier layer and, as a result, can reduce heat release and smoke production during combustion. Moreover, the polyphenylene ether resin composition thereof is easily colorable and has excellent shaping processability in formation of various shaped articles. Consequently, it is possible to meet requirements in relation to fire safety performance such as fire spread, ignitability, heat release, smoke production, and toxicity that are demanded for resin manufactured goods used in transportation such as railway vehicles, aircraft, and ships and also for use in public buildings.

The polyphenylene ether resin composition of the present embodiment also has excellent shaping processability in formation of various shaped articles.

Moreover, it is preferable that the polyphenylene ether resin composition of the present embodiment efficiently forms bulky porous char during combustion and can reduce the flaming heat release rate and smoke production, and it is anticipated that the polyphenylene ether resin composition of the present embodiment may be used in resin manufactured goods used in public buildings and resin manufactured goods used in transportation such as railway vehicles, aircraft, and ships, for which reduction of flaming heat release, smoke density, and smoke toxicity during fire are demanded. Furthermore, the polyphenylene ether resin composition can be widely used, for example, in consumer electronics and office automation (OA), office equipment, information devices, and the automotive industry, where flame retardance is required, due to also excelling in terms of light weight, heat resistance, mechanical properties, shaping processability, acid/alkali resistance, dimensional stability, electrical characteristics, and so forth.

### REFERENCE SIGNS LIST

a: flow measurement orifice
b: exhaust temperature measurement thermocouple
c: exhaust blower
d: laser smoke density meter
e: gas sampler
f: gas analyzer
g: smoke collection hood
h: cone heater
i: spark igniter
j: sample holder
k: load cell

## Claims

1. A polyphenylene ether resin composition comprising:
a polyphenylene ether (A);
an organosulfonic acid and/or organosulfonic acid alkali metal salt (C); and
an aromatic phosphate flame retardant (D), wherein
50 mass% or more of the polyphenylene ether (A) is contained per 100 mass% of the polyphenylene ether resin composition, and
the polyphenylene ether resin composition has a maximum heat release rate (HRR (max)) of 250 kW/m² or less as measured in accordance with ISO 5660-1 using a cone calorimeter with a proviso that in measurement of the maximum heat release rate (HRR (max)) using the cone calorimeter, radiant heat is 50 kW/m², a distance between a lower edge of a cone heater and an upper surface of a plate specimen for evaluation is 25 mm, and a plate specimen for evaluation obtained by arranging two 90 mm (L) × 50 mm (W) × 2.5 mm (t) plates formed from the polyphenylene ether resin composition in parallel is used.

2. A polyphenylene ether resin composition comprising, per 100 mass% of the polyphenylene ether resin composition:
50 mass% to 90 mass% of a polyphenylene ether (A);
0 mass% to 40 mass% of a styrene resin (B);
0.01 mass% to 5 mass% of an organosulfonic acid and/or organosulfonic acid alkali metal salt (C); and
5 mass% to 25 mass% of an aromatic phosphate flame retardant (D).

3. The polyphenylene ether resin composition according to claim 1 or 2, wherein the organosulfonic acid and/or organosulfonic acid alkali metal salt (C) is potassium perfluorobutanesulfonate.

4. The polyphenylene ether resin composition according to any one of claims 1 to 3, further comprising 0.1 mass% to 5 mass% of an amino group-containing modified polysiloxane (E) per 100 mass% of the polyphenylene ether resin composition.

5. The polyphenylene ether resin composition according to claim 4, wherein the amino group-containing modified polysiloxane (E) has a kinematic viscosity of 10 mm²/s to 300 mm²/s at 25°C.

6. The polyphenylene ether resin composition according to claim 4 or 5, wherein an amino group equivalent of the amino group-containing modified polysiloxane (E) is 0.1 mmol/g to 2 mmol/g.

7. The polyphenylene ether resin composition according to any one of claims 4 to 6, wherein the amino group-containing modified polysiloxane (E) is an amino group-containing modified polydimethylsiloxane.

8. The polyphenylene ether resin composition according to any one of claims 1 to 7, wherein the polyphenylene ether (A) includes a polyphenylene ether functionalized by an unsaturated carboxylic acid or an acid anhydride.

9. A shaped product comprising, per 100 mass% of the shaped product:
50 mass% to 90 mass% of a polyphenylene ether (A);
0 mass% to 40 mass% of a styrene resin (B);
0.01 mass% to 5 mass% of an organosulfonic acid and/or organosulfonic acid alkali metal salt (C);
5 mass% to 25 mass% of an aromatic phosphate flame retardant (D); and
0.1 mass% to 5 mass% of an amino group-containing modified polysiloxane (E), wherein
the shaped product has a maximum heat release rate (HRR (max)) of 250 kW/m² or less as measured in accordance with ISO 5660-1 using a cone calorimeter with a proviso that in measurement of the maximum heat release rate (HRR (max)) using the cone calorimeter, radiant heat is 50 kW/m², a distance between a lower edge of a cone heater and an upper surface of a plate specimen for evaluation is 25 mm, and a plate specimen for evaluation obtained by arranging two 90 mm (L) × 50 mm (W) × 2.5 mm (t) shaped products in parallel is used.
